Europäisches Patentamt

European Patent Office

Office européen des brevets

(19)

(11) Veröffentlichungsnummer: **0 046 489**
**A2**

(12) ## EUROPÄISCHE PATENTANMELDUNG

(21) Anmeldenummer: **81105012.9**

(22) Anmeldetag: **27.06.81**

(51) Int. Cl.³: **B 60 B 19/10**

(30) Priorität: **27.08.80 DE 3032274**

(43) Veröffentlichungstag der Anmeldung:
**03.03.82 Patentblatt 82/9**

(84) Benannte Vertragsstaaten:
**DE FR GB IT**

(71) Anmelder: **Wirth, Karl, GmbH Leichtmetallwerk**
**Heinrich-Hertz-Strasse**
**D-7521 Forst(DE)**

(72) Erfinder: **Wirth, Karl**
**Goethestrasse 10**
**D-7521 Hambrücken(DE)**

(74) Vertreter: **Lichti, Hans, Dr. Ing. Dr. Ing. Hans Lichti**
**Dipl.-Ing. Heiner Lichti et al,**
**Dipl.-Phys. Dr. Jost Lempert Patentanwälte Durlacher**
**Strasse 31 Postfach 410760**
**D-7500 Karlsruhe 41/Grötzingen(DE)**

(54) **Rad für Kraftfahrzeuge.**

(57) Es handelt sich um ein Rad für Kraftfahrzeuge, mit Felge (7), Radschüssel (5) und von der Innenseite der Radschüssel (5) zur Felge verlaufenden Rippen (6), wobei die Radschüssel (5) von der Radaußenseite her mindestens abschnittsweise hohlkegelförmig eingesenkt ist und wobei die Rippen Schaufeln eines Gebläses bilden. Ein solches Rad wird zur Erzielung einer guten Gebläsewirkung auch schon bei geringen Geschwindigkeiten sowie geringen Leistungsverlusten bei hohen Geschwindigkeiten derart weitergebildet, daß der Querschnitt der Radschüssel (5) an der Innenseite im Bereich der axialen Erstreckung der Rippen (6) im wesentlichen geradlinig begrenzt ist und daß die innenseitige Begrenzung (12) der Rippen (6) von der Radschüssel (5) zur Felge (7) zur Radaußenseite hin geneigt verläuft.

FIG. 1

EP 0 046 489 A2

**0046489**

DR. ING. HANS LICHTI · DIPL.-ING. HEINER LICHTI
DIPL.-PHYS. DR. JOST LEMPERT
PATENTANWÄLTE

D-7500 KARLSRUHE 41 (GRÖTZINGEN) · DURLACHER STR. 31 (HOCHHAUS)
TELEFON (0721) 48511

Karl Wirth GmbH Leichtmetallwerk

D-7521   F O R S T

25. Juni 1981
6066/81-Le

## RAD FÜR KRAFTFAHRZEUGE

Die Erfindung betrifft ein Rad für Kraftfahrzeuge, mit Felge, Radschüssel und von der Innenseite der Radschüssel zur Felge verlaufenden Rippen, wobei die Radschüssel von der Radaußenseite her mindestens abschnittsweise hohlkegelförmig eingesenkt ist und wobei die Rippen Schaufeln eines Gebläses bilden.

Bei Rädern dieser Gattung sind Rippen und Radschüssel so ausgebildet, daß bei der Radumdrehung eine Gebläsewirkung auftritt, durch die zur Kühlung der im Radbereich angeordneten Bremsen, insbesondere von Bremsscheiben, ein Luftstrom aus dem Raum unterhalb des Fahrzeugs an den Bremsen vorbei zur Radaußenseite erzeugt wird. Die Rippen sind dazu üblicherweise radial angeordnet und wirken – mindestens näherungsweise – wie ein Radialgebläse.

Solche Maßnahmen zur Kühlung der Bremsen erweisen sich stets als zweckmäßig, wenn - insbesondere bei verhältnismäßig schnellen und/ oder schweren Fahrzeugen - mit einer hohen Belastung der Bremsen zu rechnen ist, und dementsprechend bezieht die Erfindung sich auch auf beliebig aufgebaute Kraftfahrzeugräder der eingangs beschriebenen Gattung. Die Notwendigkeit einer wirksamen Bremsenkühlung besteht jedoch in besonderem Maße bei Wettbewerbsfahrzeugen, auf die die Erfindung sich insbesondere bezieht. Die Räder von Wettbewerbsfahrzeugen sind - im Gegensatz zu Rädern für Gebrauchsfahrzeuge - nicht einteilig aufgebaut, sondern bestehen im wesentlichen aus einem Tragkörper aus Radschüssel, Rippen und an die Rippen angeschlossenem Felgenkranz sowie zwei mit dem Felgenkranz verschraubten Felgenhälften, die in ihrer Breite entsprechend den eingesetzten Reifen wählbar sind.

Bei einem bekannten Rad der eingangs beschriebenen Gattung (vgl. DE-PS 17 55 523) verläuft das Profil der Radschüssel - von der Anlagfläche am Achsflansch ausgehend - zunächst mit geringer Neigung gegenüber der Radachse, um anschließend in einen weit geöffneten Hohlkegel überzugehen, so daß der Querschnitt der Radschüssel im wesentlichen einen stumpfen Winkel darstellt. Die Rippen weisen über ihre ganze radiale Ausdehnung im wesentlichen gleiche axiale Breite auf, wobei die innere Rippenbegrenzung zunächst achssenkrecht verläuft und im äußeren Bereich zur Radinnenseite zurückweicht. Entsprechendes gilt für ein weiteres (aus der Praxis) bekanntes Rad der eingangs beschriebenen Gattung, bei dem lediglich Radschüssel und Rippen im Profil bogenförmig verrundet sind.

Bei diesen bekannten Rädern der eingangs beschriebenen Gattung wird zwar eine durch-aus wirksame Luftströmung zur Bremsenkühlung erreicht.

Nachteilig ist jedoch, daß bei diesen bekannten Rädern ein verhältnismäßig hohes Gewicht hingenommen werden muß, um die erforderliche Stabilität des Rades zu erreichen. Außerdem läßt auch die Gebläsewirkung bei diesen bekannten Rädern zu wünschen übrig. Im Einsatz zeigt sich, daß bei niedrigen Geschwindigkeiten, die beispielsweise nach einer harten Bremsung gegeben sind, die Gebläsewirkung nicht ausreicht, um eine schnelle Abkühlung der Bremsen zu bewirken, und das andererseits bei hohen Geschwindigkeiten recht erhebliche Leistungsverluste durch die Gebläsewirkung der Räder auftreten. Dies wirkt sich besonders nachteilig bei Wettbewerbsfahrzeugen aus, bei denen einerseits extreme Bremsbelastungen auftreten und nach jeder Bremsung möglichst schnell die volle Bremsleistung wieder hergestellt sein muß und bei denen andererseits selbst geringe Leistungseinbußen die Wettbewerbsfähigkeit erheblich verringern können.

Der Erfindung liegt die Aufgabe zugrunde, ein Rad der eingangs beschriebenen Gattung unter Einhaltung von geringem Gewicht und hoher Stabilität so auszugestalten, daß bei geringen Leistungsverlusten bei hohen Geschwindigkeiten eine gute Gebläsewirkung auch schon bei geringen Geschwindigkeiten erreicht wird.

Diese Aufgabe wird erfindungsgemäß dadurch gelöst, daß der Querschnitt der Radschüssel an der Innenseite im Bereich der axialen Erstreckung der Rippen im wesentlichen geradlinig begrenzt ist und daß die innenseitige Begrenzung der Rippen von der Radschüssel zur Felge zur Radaußenseite hin geneigt verläuft. Mit anderen Worten wird die Radschüssel an der Radinnenseite durch eine einteilig durchgehende Kegelstumpffläche begrenzt, deren Erzeugende eine Gerade ist. Die Rippen, die an die Innenseite der Radschüssel angeschlossen sind, konvergieren zur Felge hin, und zwar in der Weise, daß ihre innenseitige, d.h. der Radschüssel gegenüberliegende Begrenzung, die vorzugsweise im wesentlichen geradlinig verläuft, zur Radaußenseite hin geneigt ist. Diese Ausbildung von Radschüssel und Rippen erlaubt es, die erforderliche Radstabilität mit sehr geringem Gewicht zu erreichen. Außerdem zeigt sich überraschenderweise, daß sich dabei . Strömungsverhältnisse einstellen, die bereits bei geringen Geschwindigkeiten eine gute Gebläsewirkung zur Folge haben, während bei hohen Geschwindigkeiten die erforderliche Gebläsewirkung mit verhätlnismäßig geringen Leistungsverlusten erreicht wird.

Im Hinblick auf Gewicht und Stabilität empfiehlt es sich, daß bei einem erfindungsgemäßen Rad der Querschnitt der Radschüssel auch an der Radaußenseite im wesentlichen geradlinig begrenzt ist und sich außerdem in Richtung zur Felge verjüngt, so daß ein vom Radflansch zur umfangsseitigen Begrenzung einteilig durchgehender Hohlkegelstumpf resultiert, dessen Wandstärke nach außen hin abnimmt. Besonders günstige Strömungsverhältnisse werden erreicht, wenn die (in Achsrichtung gesehen ) außenseitige Begrenzung der Rippen in die Umfangsfläche der Radschüssel bündig, d.h. kantenfrei übergeht und von der Radschüssel zur Felge zur Radinnenseite hin geneigt verläuft. Als besonders vorteilhaft hat sich eine Ausführungsform erwiesen, bei der die außenseitige Begrenzung der Rippen und/oder der Querschnitt der Radschüssel gegenüber der Radachse um einen Winkel von ca. 45° geneigt verlaufen, wobei sich aus der vorstehenden Erläuterung ergibt, daß Rippenbegrenzung und Querschnitt der Radschüssel selbstverständlich in entgegengesetzten Richtungen geneigt sind. Ein besonders günstiges Leistungsverhalten des durch die Rippen gebildeten Gebläses resultiert, wenn die innenseitige Begrenzung der Rippen gegenüber der Radachse um einen Winkel von ca. 60° geneigt verläuft.

Besonders gute Stabilität wird bei einem erfindungsgemäßen Rad dadurch erreicht, daß die Rippen an der Innenseite im achsnahen Bereich in Rippenfüße übergehen, die mit einem an die Radschüssel angeschlossenen Radflansch verbunden sind, wobei die Rippenfüße gleiche Stärke wie die Rippen aufweisen und die Begrenzungen der Rippenfüße unter einem gegenüber den innenseitigen Begrenzungen der Rippen kleineren Winkel zur Radachse in die Umfangsfläche des Radflansches übergehen, d.h. also keinen Absatz bilden. Durch diese Maßnahme wird zugleich die Gebläseleistung insbesondere bei geringen Geschwindigkeiten günstig beeinflußt.

Die Erfindung läßt sich, wie erläutert, sowohl bei der für Gebrauchsfahrzeuge üblichen einteiligen Radausführungen wie auch bei der beschriebenen dreiteiligen Ausführung verwirklichen, die bei Rädern für Wettbewerbsfahrzeuge üblich ist. In diesem letztgenannten Fall empfiehlt es sich, die achsseitige Begrenzung des Felgenkranzes, mit dem die Felgenhälften verschraubt werden, nicht als achsparallelen Zylinder auszuführen, sondern zur Radaußenseite hin konisch zu erweitern.

Die Erfindung läßt sich grundsätzlich bei Rädern für verschiedenste Anwendungsfälle verwirklichen, erweist sich indessen als besonders vorteilhaft bei Rädern für Wettbewerbsfahrzeuge, bei denen regelmäßig extreme Beanspruchungen auftreten. Ferner lassen erfindungsgemäße Räder sich ohne weiteres in herkömmlicher Weise durch Verschweißen entsprechender Preßteile herstellen, besonders vorteilhaft ist jedoch die Ausführung durch Gießen oder Schmieden von Leichtmetall.

Nachfolgend wird die Erfindung anhand einer lediglich ein Ausführungsbeispiel darstellenden Zeichnung näher erläutert. Es zeigen

Figur 1    ein Rad für ein Kraftfahrzeug ausschnittsweise im Längsschnitt,

Figur 2    eine ausschnittsweise Stirnansicht der Radinnenseite des Gegenstands der Fig. 1.

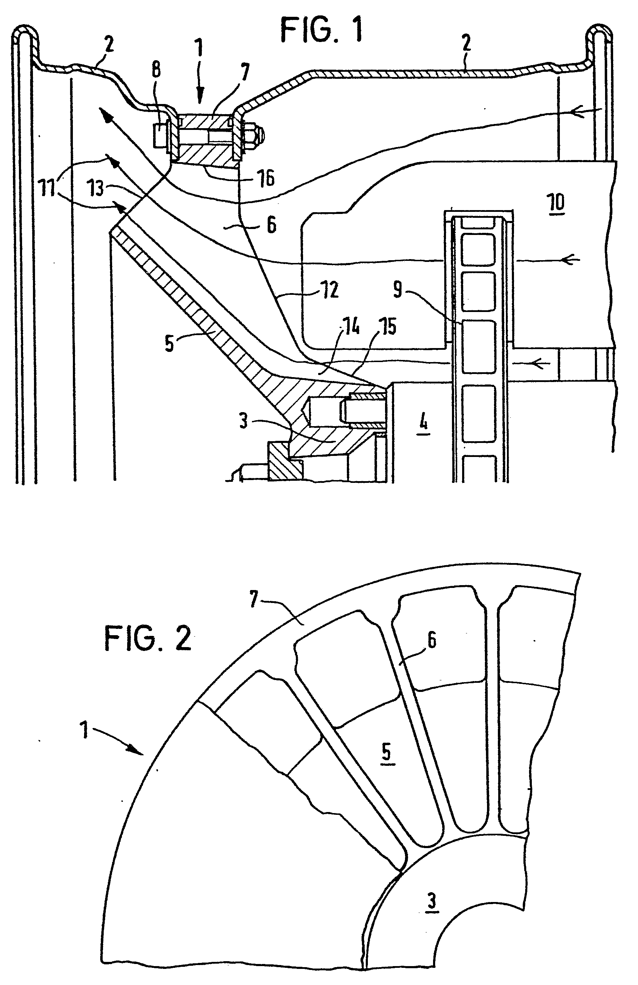

Das in den Fign. dargestellte Rad ist für den Einsatz bei Wettbewerbsfahrzeugen bestimmt und besteht in seinem grundsätzlichen Aufbau aus einem Felgenträger 1 und zwei Felgenhälften 2. Der Felgenträger 1 weist zunächst einen Radflansch 3 auf, der mit einer üblichen und nicht weiter erläuterten Schnellspanneinrichtung mit dem Achsflansch 4 des Fahrzeugs verbunden ist. An den Radflansch 3 schließt sich eine Radschüssel 5 an, von deren Innenseite Rippen 6 ausgehen , die umfangsseitig an einen Felgenkranz 7 angeschlossen sind. Die Felgenhälften 2 und der Felgenkranz 7 sind aus Leichtmetall gegossen und mittels Schraubbolzen 8 miteinander verschraubt. Die Fig. 1 zeigt ferner eine mit der Fahrzeugachse verbundene Bremsscheibe 9 mit zugehörigem Bremssattel 1o.

Die Rippen 6 in Verbindung mit der Radschüssel 5 bilden ein Gebläse, das eine durch Pfeile 11 angedeutete Luftströmung bewirkt, durch die die Bremsscheibe 9 gekühlt wird.

Der Querschnitt der Radschüssel 5 ist, wie die Fig. 1 erkennen läßt, an der Radinnenseite im Bereich der axialen Erstreckung der Rippen 6 durch eine gegenüber der Radachse um einen Winkel von ca. 45$^{\circ}$ nach außen geneigte Erzeugende geradlinig begrenzt, so daß die innenseitige Oberfläche der Radschüssel 5 die Gestalt eines einteiligen Kegelstumpfes aufweist. Die innenseitige Begrenzung 12 der Rippen 6 verläuft von der Radschüssel 5 ausgehend zum Felgenkranz 7 zur Radaußenseite hin um einen Winkel von ca. 6o$^{\circ}$ gegehüber der Radachse geneigt.

Der Querschnitt der Radschüssel 5 ist an der Radaußenseite gleichfalls im wesentlichen geradlinig begrenzt und verjüngt sich in Richtung zum Felgenkranz 7, wie die Fig. 1 deutlich erkennen läßt. Die außenseitige Begrenzung 13 der Rippen 6 ist gegenüber der Radachse um einen Winkel von ca. 45$^{\circ}$ zur Radinnenseite hin geneigt und geht in die Umfangsfläche der Radschüssel 5 bündig ohne Kanten über.

Im achsnahen Bereich gehen die Rippen 6 an der Radinnenseite in Rippenfüße 14 über, die an den Radflansch 3 angeschlossen sind. Die Rippenfüße 14 weisen gleiche Stärke wie die Rippen 6 selbst auf, ihre Begrenzung 15 geht unter einem Winkel , der kleiner ist als der Neigungswinkel der innenseitigen Rippenbegrenzungen 12, absatzlos in die Umfangsfläche des Radflansches 3 über.

In der Fig. 1 ist angedeutet, daß die achsseitige Querschnittsbegrenzung 16, mit anderen Worten die Innenwandung, des Felgenkranzes 7 zur Radaußenseite hin konisch erweitert ist.

Die Fig. 2 zeigt - von der Radinnenseite her - eine Stirnansicht des Felgenträgers 1 mit Radflansch 3, Radschüssel 5, Rippen 6 und Felgenkranz 7 und bedarf keiner weiteren Erläuterung.

0046489

DR. ING. HANS LICHTI · DIPL.-ING. HEINER LICHTI
DIPL.-PHYS. DR. JOST LEMPERT
PATENTANWÄLTE

D-7500 KARLSRUHE 41 (GRÖTZINGEN) · DURLACHER STR. 31 (HOCHHAUS)
TELEFON (0721) 48511

Karl Wirth GmbH Leichtmetallwerk

25. Juni 1981

6066/81-Le

D-7521  F O R S T

PATENTANSPRÜCHE

1. Rad für Kraftfahrzeuge, mit Felge, Radschüssel und von der Innenseite der Radschüssel zur Felge verlaufenden Rippen, wobei die Radschüssel von der Radaußenseite her mindestens abschnittsweise hohlkegelförmig eingesenkt ist und wobei die Rippenschaufeln eines Gebläses bilden, dadurch gekennzeichnet, daß der Querschnitt der Radschüssel (5) an der Innenseite im Bereich der axialen Erstreckung der Rippen (6) im wesentlichen geradlinig begrenzt ist und daß die innenseitige Begrenzung (12) der Rippen (6) von der Radschüssel (5) zur Felge (7) zur Radaußenseite hin geneigt verläuft.

2. Rad nach Anspruch 1, dadurch gekennzeichnet, daß der Querschnitt der Radschüssel (5) an der Radaußenseite im wesentlichen geradlinig begrenzt ist und sich in Richtung zur Felge (7) verjüngt.

3. Rad nach Anspruch 1 oder 2, dadurch gekennzeichnet, daß die außenseitige Begrenzung der Rippen (6) in die Umfangsfläche der Radschüssel (5) bündig übergeht und von der Radschüssel (5) zur Felge (7) zur Radinnen-

- 2 -

seite hin geneigt verläuft.

4.  Rad nach einem der Ansprüche 1 bis 3, dadurch gekennzeichnet, daß die außenseitige Begrenzung (13) der Rippen (6) und/oder der Querschnitt der Radschüssel (5) gegen über der Radachse um einen Winkel von ca. $45^\circ$ geneigt verlaufen.

5.  Rad nach einem der Ansprüche 1 bis 4, dadurch gekennzeichnet, daß die innenseitige Begrenzung (12) der Rippen (6) gegenüber der Radachse um einen Winkel von ca. $60^\circ$ geneigt verläuft.

6.  Rad nach einem der Ansprüche 1 bis 5, dadurch gekennzeichnet, daß die Rippen (6) an der Innenseite im achsnahen Bereich in Rippenfüße (14) übergehen, die mit einem an die Radschüssel (5) angeschlossenen Radflansch (3) verbunden sind, daß die Rippenfüße (14) gleiche Stärke wie die Rippen (6) aufweisen und daß die Begrenzungen (15) der Rippenfüße (14) unter einem gegenüber den innenseitigen Begrenzungen (12) der Rippen (6) kleineren Winkel zur Radachse in die Umfangsfläche des Radflansches (3) übergehen.

7.  Rad nach einem der Ansprüche 1 bis 6, in der Ausführungsform mit an die Rippen angeschlossenem Felgenkranz und geteilter Felge, dadurch gekennzeichnet, daß die achsseitige Begrenzung (16) des Felgenkranzes (7) sich zur Radaußenseite hin konisch erweitert.

6066/81-Le
0046489

## FIG. 1

## FIG. 2